# EUROPÄISCHE PATENTSCHRIFT

(11) **EP 2 722 154 B1**
(45) Veröffentlichungstag und Bekanntmachung des Hinweises auf die Patenterteilung: **11.01.2017**
(21) Anmeldenummer: 13189489.1
(22) Anmeldetag: 21.10.2013
(51) Int. Cl.: B29C 51/12

(54) **Tiefgezogener Kunststoffhohlkörper und Verfahren zu seiner Herstellung**
Deep-drawn hollow plastic bodies and method for producing the same
Corps creux en matière synthétique embouti et son procédé de fabrication

(30) Priorität: 19.10.2012 DE 102012219149; 23.10.2012 DE 102012219358
(43) Veröffentlichungstag der Anmeldung: 23.04.2014
(73) Patentinhaber: Dr. Doll Holding GmbH, 74193 Schwaigern (DE)
(72) Erfinder: Doll, Theo, Dr., 74194 Schwaigern (DE)
(74) Vertreter: Patentanwälte Ruff, Wilhelm, Beier, Dauster & Partner mbB

(56) Entgegenhaltungen:
- EP-A1- 1 886 791
- EP-A2- 2 591 909
- WO-A1-2010/151106
- JP-A- 2002 096 379
- US-A1- 2005 237 184
- US-A1- 2011 135 862

## Beschreibung

Die Erfindung betrifft einen tiefgezogenen Kunststoffhohlkörper in Form einer Kunststoffpalette, der durch zwei randseitig umlaufend miteinander verschweißte Kunststoffschalen gebildet ist, mit wenigstens einer Hohlkammer, in die wenigstens ein formstabiler Kunststoffkörper eingelegt ist, sowie ein Verfahren zur Herstellung eines derartigen tiefgezogenen Kunststoffhohlkörpers, wobei eine erste Kunststoffplatte unter Bildung wenigstens einer offenen Hohlkammer zu einer ersten Kunststoffschale tiefgezogen wird.

Tiefgezogene Kunststoffhohlkörper werden in EP1886791-A, US2011135862-A, US2005237184-A, WO2010151106- A, offenbart.

Ein Verfahren zur Herstellung eines tiefgezogenen Hohlkörpers in Form einer Kunststoffpalette ist als Twinsheet-Verfahren allgemein bekannt. Dabei werden in einem entsprechenden Werkzeug gleichzeitig zwei Kunststoffplatten zu zueinander komplementären Kunststoffschalen tiefgezogen und anschließend zusammengepresst, wodurch sich eine Verschweißung der beiden Kunststoffschalen an den Kontaktstellen und insbesondere an einem umlaufenden Randbereich ergibt. Ein entsprechender tiefgezogener Kunststoffhohlkörper bildet ein Twinsheet-Bauteil, das insbesondere als Palettenboden von Palettenbehältern eingesetzt wird, die in der Automobilbranche zum Transport und zur Lagerung von Fahrzeug- und Motorenteilen eingesetzt werden.

Aufgabe der Erfindung ist es, einen tiefgezogenen Kunststoffhohlkörper sowie ein Verfahren zu seiner Herstellung zu schaffen, die eine verbesserte Isolierung und eine erhöhte Steifigkeit für den Kunststoffhohlkörper ermöglichen.

Diese Aufgabe wird für den tiefgezogenen Kunststoffhohlkörper der eingangs genannten Art dadurch gelöst, dass der Kunststoffkörper mit seiner Außenkontur auf eine Innenkontur der Hohlkammer abgestimmt und über seine Oberfläche flächig und stoffschlüssig mit benachbarten Innenflächen der Hohlkammer verbunden ist. Erfindungsgemäß ist ein formstabiler Kunststoffkörper nach Anspruch 1 vorgesehen, der in die Hohlkammer eingelegt ist und durch die stoffschlüssige Verbindung zu den Innenflächen der Hohlkammer eine Versteifung des Kunststoffhohlkörpers bewirkt. Denn dadurch, dass der Kunststoffkörper mit seiner Außenkontur auf eine Innenkontur der Hohlkammer abgestimmt ist, stützt er die beiden Kunststoffschalen innenseitig. Durch die stoffschlüssige und flächige Verbindung des Kunststoffkörpers mit den Innenflächen der Kunststoffschalen wird eine feste Verbindung zwischen Kunststoffkörper und Kunststoffschalen erzielt, die bei einer Deformation der Kunststoffschalen eine hohe Stabilität gewährleistet. Die stoffschlüssige Verbindung kann thermisch durch eine Verschweißung zwischen den Oberflächen des Kunststoffkörpers und den Innenflächen der Kunststoffschalen erfolgen. Alternativ kann die stoffschlüssige Verbindung durch eine Haftschicht, insbesondere eine Klebstoffschicht, erzielt werden. Wichtig für die erfindungsgemäße Lösung ist es, dass die Kunststoffmaterialien des Kunststoffkörpers einerseits und der Kunststoffschalen andererseits so aufeinander abgestimmt sind, dass eine thermoplastische Verschweißung im Kontaktbereich zwischen dem Kunststoffkörper und den Kunststoffschalen erfolgt. Der Kunststoffkörper ist als Kunststoffschaumkörper oder als Kunststoffspritzgußkörper gestaltet. Der Kunststoffschaumkörper bildet einen materialeinhetlichen Blockkörper, bevorzugt aus EPP (expandiertem Polypropylen) oder EPS (expandiertem Polystyrol). Beim Einsatz von EPS ist es vorteilhaft, hochtemperaturbeständiges EPS vorzusehen.

Die erfindungsgemäße Lösung eignet sich in besonders vorteilhafter Weise für tiefgezogene, zweischalige Kunststoffhohlkörper, die als Palettenboden, als Füße für derartige Palettenböden, als Palettendeckel und als Palettenringe von Palettenbehältern gestaltet sind, die zum Transport und zur Lagerung von Teilen für den Fahrzeug- und Motorenbau dienen.

In Ausgestaltung der Erfindung ist der Kunststoffkörper mit mehreren Aussparungen zur Materialeinsparung versehen. Diese Aussparungen werden bereits bei der Herstellung des Kunststoffschaumkörpers durch entsprechende Gestaltung der Werkzeugform unter Zuhilfenahme von Kernen, Dornen oder ähnlichem ausgeformt. Durch die Materialersparnis des teuren Kunststoffschaums ergeben sich reduzierte Materialkosten. Alternativ werden sie nachträglich durch spanende Bearbeitung in einen fertiggestellten, blockförmigen Kunststoffschaumkörper eingebracht.

Für das Verfahren zur Herstellung eines zweischaligen, tiefgezogenen Kunststoffhohlkörpers der eingangs genannten Art wird die der Erfindung zugrundeliegende Aufgabe dadurch gelöst, dass wenigstens ein formstabiler Kunststoffkörper mit einer auf eine Innenkontur der Hohlkammer abgestimmten Außenkontur versehen und in die Hohlkammer eingesetzt wird, und dass eine zweite Kunststoffplatte bereitgestellt und durch Tiefziehen unter Bildung der zweiten Kunststoffschale auf die erste Kunststoffschale sowie den wenigstens einen Kunststoffkörper aufgesetzt und umlaufend randseitig mit einem Randbereich der ersten Kunststoffschale verschweißt wird, und dass der Kunststoffkörper an seiner Oberfläche stoffschlüssig mit benachbarten Innenkonturen der beiden Kunststoffschalen verbunden wird. Die stoffschlüssige Verbindung kann vorteilhaft durch Verschweißen oder durch Vergeben erfolgen.

In Ausgestaltung der Erfindung wird der Kunststoffkörper als Kunststoffschaumkörper oder als Kunststoffspritzgußkörper gestaltet.

In weiterer Ausgestaltung des Verfahrens wird der Kunststoffschaumkörper vor dem Einsetzen in die Hohlkammer der ersten Kunststoffschale mit einem Übermaß gegenüber der Hohlkammer sowie einer zweiten durch die zweite Kunststoffschale gebildeten Hohlkammer gefertigt. Durch dieses Übermaß ist gewährleistet, dass der Kunststoffschaumkörper beim Tiefziehen und Aufsetzen der zweiten Kunststoffschale außenseitig unter Druck gesetzt wird, wodurch in Verbindung mit den noch heißen Kunststoffschalen ein Anschmelzen der Oberflächen des Schaumkörpers erfolgt, das zu der Verschweißung mit den Innenflächen der beiden Kunststoffschalen im Bereich der Hohlkammern führt. Die Kunststoffschalen können identisch oder unterschiedlich zueinander gestaltet werden, je nachdem, wie der zu fertigende Kunststoffhohlkörper gestaltet sein soll.

In weiterer Ausgestaltung der Erfindung wird der Kunststoffschaumkörper mit den Innenkonturen der beiden Kunststoffplatten verschweißt. Für diese Ausgestaltung müssen die die Kunststoffschalen bildenden Kunststoffplatten und der Kunststoffschaumkörper aus miteinander verschweißbaren Kunststoffmaterialien bestehen. Besonders vorteilhaft bestehen die Kunststoffplatten aus HDPE oder auch aus PP, PE, oder ABS oder PC (Polycarbonat) und der Kunststoffschaumkörper aus EPP oder EPS. Bei einer Kombination der Kunststoffplatten aus HDPE und des Kunststoffschaumkörpers aus EPP kann der hergestellte Kunststoffhohlkörper in einfacher Weise entsorgt werden, da sowohl beim Kunststoffschaumkörper als auch bei den Kunststoffschalen Kunststoffmaterialien mit sehr ähnlichen stofflichen Eigenschaften zugrundeliegen. Dadurch ist ein einfaches Recycling ermöglicht.

In weiterer Ausgestaltung der Erfindung wird der Kunststoffschaumkörper in heißem Zustand der zu der Kunststoffschale tiefgezogenen ersten Kunststoffplatte eingesetzt. In weiterer Ausgestaltung wird die zweite Kunststoffplatte zu der zweiten Kunststoffschale tiefgezogen und in heißem Zustand unter Druck auf die erste Kunststoffschale und den wenigstens einen Kunststoffschaumkörper aufgesetzt und sowohl randseitig mit der ersten Kunststoffschale als auch flächig mit der Oberfläche des Kunststoffschaumkörpers verschweißt. Die Verschweißung erfolgt zwangsläufig durch den heißen Zustand der Kunststoffschale und das Anschmelzen des Kunststoffschaumkörpers im Bereich der Oberflächen.

In weiterer Ausgestaltung der Erfindung wird der Kunststoffkörper in seinen Außenabmessungen auf Innenabmessungen der durch die beiden Kunststoffschalen begrenzten Hohlkammer abgestimmt, und eine Oberfläche des Kunststoffkäpers wird mit einer Haftschicht, insbesondere einer Klebstoffschicht, versehen, die nach dem Zusammenfügen der Kunststoffschalen die stoffschlüssige Verbindung zu den Innenkonturen der Kunststoffschalen bildet. Bei dieser Ausgestaltung erfolgt die stoffschlüssige Verbindung zwischen Kunststoffkörper und Innenseiten der Kunststoffschalen vorzugsweise durch eine Klebstoffschicht, wobei der Klebstoff auf den Kunststoffkörper und/oder auf die Innenflächen der Kunststoffschalen im Bereich der Hohlkammer aufgebracht wird, bevor der Kunststoffkörper eingesetzt wird. Der Klebstoff ist vorzugsweise wärmeaktiviert, d.h. er erhält seine Klebeeigenschaften erst bei größerer Hitze ab ca. 60°C. Bei Raumtemperatur ist er zwar als Schicht auf dem Kunststoffkörper vorhanden, ohne aber eine Klebewirkung zu haben. Es ist auch möglich, den Kunststoffschaumkörper in seinen Außenabmessungen geringfügig größer als diejenigen Abmessungen der Holhlkammer zwischen den beiden Kunststoffschalen zu gestalten und nach dem Einsetzen des Kunststoffschaumkörpers die Kunststoffschalen miteinander zu verbinden und dabei den Kunststoffschaumkörper außenseitig unter Druck zu setzen.

In weiterer Ausgestaltung der Erfindung wird wenigstens die Hohlkammer der ersten Kunststoffschale gekühlt, bevor der Kunststoffkörper eingesetzt wird. Es ist auch möglich, ergänzend noch vor dem Aufsetzen der zweiten Kunststoffschale auch die Hohlkammer der zweiten Kunststoffschale zu kühlen, um zu vermeiden, dass der Kunststoffkörper im Bereich seiner Oberflächen angeschmolzen wird. Diese Ausgestaltung ist für eine stoffschlüssige Verbindung zwischen Kunststoffkörper und Kunststoffschalen in kühlerem Zustand als die Temperatur der übrigen Flächen der Kunststofschalen durch Verklebung vorgesehen.

In weiterer Ausgestaltung der Erfindung wird der Kunststoffschaumkörper vor dem Einsetzen in die Hohlkammer zur Erzielung einer glatten Oberfläche im Bereich seiner Außenkontur angeschmolzen. Dabei wird der Kunststoffschaumkörper im Bereich seiner Oberfläche angeschmolzen, bevor er in die Hohlkammer der ersten Kunststoffschale eingesetzt wird. Die Bildung der glatten Oberfläche dient dazu, anschließend nach Aufbringen einer entsprechenden Klebstoffschicht eine gute flächige und stoffschlüssige Verbindung zwischen den Außenflächen des Kunststoffschaumkörpers und den Innenflächen der Hohlkammer zwischen den beiden Kunststoffschalen zu erzielen.

In weiterer Ausgestaltung der Erfindung wird vor dem Aufbringen der zweiten Kunststoffschale eine Verstärkungsprofilanordnung, insbesondere ein Verstärkungsrahmen, in die erste Kunststoffschale oder in den Kunststoffkörper eingefügt. Als Verstärkungsprofilanordnung können statt eines geschlossenen Rahmens auch mehrere zueinander parallel beabstandete Verstärkungsprofile in Form von Leisten oder ähnlichem vorgesehen sein, die derart relativ zu entsprechenden Füßen der Kunststoffpalette angeordnet sind, dass sie eine Lastverteilung auf die entsprechenden Füße bewirken. Auch der Verstärkungsrahmen erstreckt sich über entsprechend angeordnete Füße der Kunststoffpalette, um die gewünschte Krafteinleitung von oben her zu bewirken. Dieser Verstärkungsrahmen kann als Rahmen aus metallischen Rohren, insbesondere als Stahlrahmen, gestaltet sein und dient zur Verstärkung und Versteifung des Kunststoffhohlkörpers, d.h. der Kunststoffpalette. Diese Ausgestaltung ist insbesondere vorteilhaft für den Einsatz des Kunststoffhohlkörpers für einen Palettenboden eines Palettenbehälters, wie er zuvor beschrieben wurde.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform eines erfindungsgemäßen Kunststoffhohlkörpers in Form einer Kunststoffpalette,
- Fig. 2: in einer Draufsicht eine weitere Kunststoffpalette ähnlich Fig. 1, die mit einem eingelegten Verstärkungsrahmen versehen ist,
- Fig. 3: in einer geschnittenen Explosionsdarstellung die Kunststoffpalette Fig. 1 zur Erläuterung der Verfahrensschritte zu seiner Herstellung,
- Fig. 4: eine Schnittdarstellung der Kunststoffpalette nach den Fig. 1 und 3,
- Fig. 5: in vergrößerter Darstellung einen Ausschnitt V der Kunststoffpalette nach Fig. 4,
- Fig. 6: eine Seitenansicht eines Kunststoffschaumkörpers, der in der Kunststoffpalette nach den Fig. 1 und 3 bis 5 integriert ist,
- Fig. 7: eine Ansicht des Kunststoffschaumkörpers nach Fig. 6 von unten,
- Fig. 8: in einer geschnittenen Explosionsdarstellung die zusammenzufügenden Teile eines Kunststoffhohlkörpers in Form einer Kunststoffpalette ähnlich Fig. 1,
- Fig. 9: in geschnittener Explosionsdarstellung den Kunststoffhohlkörper in Form der Kunststoffpalette nach Fig. 2 und
- Fig. 10: in einer Explosionsdarstellung eine weitere Ausführungsform einer erfindungsgemäßen Kunststoffpalette ähnlich Fig. 2.

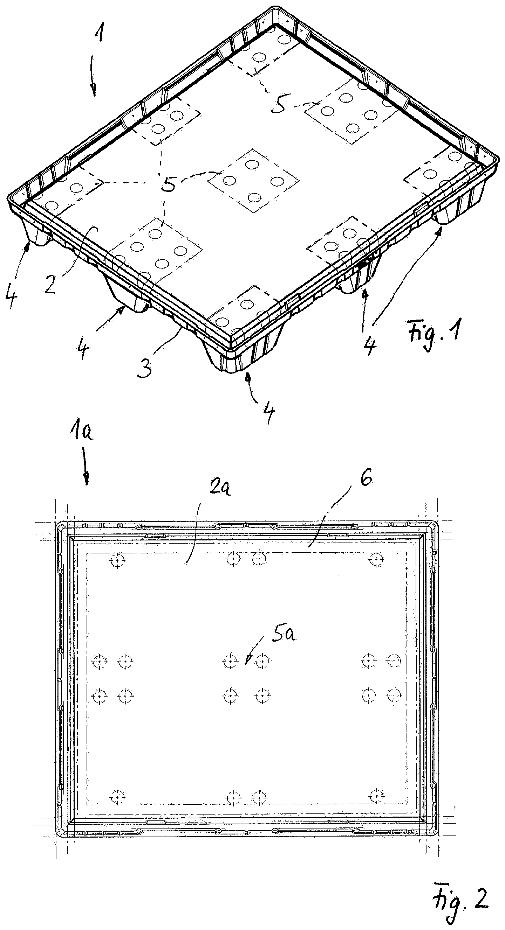

Eine Kunststoffpalette 1 nach Fig. 1 und 3 bis 7 stellt einen zweischaliger, tiefgezogenen Kunststoffhohlkörper dar, der für Palettenbehälter zur Lagerung und zum Transport von für die Automobilbranche vorgesehenen Produkten dient. Die Kunststoffpalette wird nachfolgend als Palettenboden bezeichnet. Ein derartiger Palettenbehälter weist neben dem Palettenboden 1 einen die Behälterwandungen bildenden Faltwandungsring sowie einen Deckel auf, der auf den Faltwandungsring aufsetzbar ist, sobald der Faltwandungsring sich in seinem aufgestellten und in einen Rand des Palettenbodens 1 eingesteckten Zustand befindet. Neben dem Palettenboden 1, der nachfolgend ausführlich beschrieben wird, ist auch der Faltwandungsring aus Kunststoff gestaltet und als zweischaliger Kunststoffkörper gestaltet. Auch der Deckel ist analog zu dem Palettenboden 1 als zweischaliger, tiefgezogener Kunststoffhohlkörper ausgeführt. Die Herstellung des Palettenbodens 1 wie auch des Deckels und des Faltwandungsringes des Palettenbehälters erfolgt in einem Twinsheet-Verfahren, indem zwei Kunststoffplatten mittels entsprechend auf die gewünschte Schalenform abgestimmter Werkzeugformen tiefgezogen und durch Zusammenpressen der Werkzeugformen miteinander an den Kontaktstellen verschweißt werden. Die umlaufend durchgängige Verschweißung erfolgt bei allen Twinsheet-Produkten im Randbereich, um einen dichten Abschluss der zwischen den beiden Kunststoffschalen gebildeten Hohlkammern und Hohlräume nach außen hin zu erzielen.

Der Palettenboden 1 nach den Fig. 1 und 3 bis 7 besteht aus einer ersten Kunststoffschale 3, die bei der Ausführungsform nach den Fig. 1 und 3 bis 7 die untere Kunststoffschale bildet. Zudem umfasst der Palettenboden 1 eine obere Kunststoffschale 2, die eine im Wesentlichen ebene und durchgängig geschlossene Bodenfläche für den Palettenboden 1 definiert. Die obere Kunststoffschale 2 ist randseitig umlaufend mit einer Einbuchtung versehen, die zur Steckaufnahme des Faltwandungsringes des Palettenbehälters in seiner aufgestellten Position dient.

Der Palettenboden 1 ist im Bereich seiner Unterseite mit mehreren Stützfüßen 4 versehen, die die Aufstandsflächen des Palettenbodens 1 auf einem Untergrund oder auf einem Deckel eines weiteren Palettenbehälters definieren. Die verschiedenen Stützfüße 4 sind so im Bereich der Unterseite des Palettenbodens 1 vorgesehen, dass eine Gabel eines Gabelstaplers von allen Seiten her unter diesen Palettenboden 1 fahren kann, um den Palettenboden 1 und den zugehörigen Palettenbehälter anzuheben.

Die untere Kunststoffschale 3 wird durch Tiefziehen aus einer einteiligen Kunststoffplatte gebildet, die vorzugsweise aus HDPE besteht. Die Gestaltung der Kunststoffschale 3 aus der Kunststoffplatte erfolgt durch Tiefziehen in einem entsprechenden Werkzeug. Dabei werden die Füße 4 ausgebildet, die im Bereich ihrer Innenseite jeweils eine Hohlkammer 7 definieren.

Die obere, zweite Kunststoffschale 2 wird ebenfalls aus einer Kunststoffplatte durch gleichzeitiges Tiefziehen in einem oberhalb des Werkzeugs für die untere Kunststoffschale 3 befindlichen Werkzeug gebildet. Auch die obere Kunststoffschale 2 wird aus einer ebenen Kunststoffplatte aus HDPE hergestellt. Die Verschweißung der oberen Kunststoffschale 2 mit der unteren Kunststoffschale 3 erfolgt innerhalb des Twinsheet-Werkzeugs durch Zusammenfügen der heißen Werkzeugformen. Aufgrund der Hitze und aufgrund des Druckes werden die obere Kunststoffschale 2 und die untere Kunststoffschale 3 an den Kontaktstellen und insbesondere am umlaufenden Rand beider Kunststoffschalen 2, 3 miteinander verschweißt.

Vor dem Zusammenfügen der beiden Kunststoffschalen 2, 3 wird in die Hohlkammern 7 im Bereich der Füße 4 jeweils ein Kunststoffschaumkörper 5, vorliegend aus EPP, eingesetzt, wobei der jeweilige Kunststoffschaumkörper 5 in einem vorhergehenden Arbeitsgang formstabil hergestellt wurde. Der jeweilige Kunststoffschaumkörper 5 wird in die noch heiße Kunststoffschale 3 innerhalb der entsprechenden Tiefzieh-Werkzeugform eingesetzt. Jeder Kunststoffschaumkörper 5 ist in seinen Außenabmessungen und seiner Außenkontur an die Innenkontur und die Innenabmessungen der Hohlkammer 7 jedes Fußes 4 abgestimmt, wobei der jeweilige Kunststoffschaumkörper 5 gegenüber den Innenabmessungen und der Innenkontur der jeweiligen Hohlkammer 7 ein geringes Übermaß aufweist. Durch das Einsetzen in die noch heiße Kunststoffschale 3 schmilzt der Kunststoffschaumkörper 5 im Bereich seiner Oberfläche an und geht hierdurch eine stoffschlüssige Verbindung in Form einer Verschweißung mit den benachbarten Innenwandungen der unteren Kunststoffschale 3 im Bereich der jeweiligen Hohlkammer 7 ein. Unmittelbar nach dem Einsetzen der Kunststoffschaumkörper 5 wird die ebenfalls noch heiße Kunststoffschale 2 mittels der oberen Werkzeugform auf die untere Kunststoffschale 3 aufgesetzt, wobei die korrespondierenden Innenflächen der oberen Kunststoffschale 2 zwangsläufig flächig mit den zugewandten Oberflächen der Kunststoffschaumkörper 5 in Verbindung gelangen. Das geringe Übermaß der Kunststoffschaumkörper 5 führt dazu, dass auch die obere Kunststoffschale 2 beim Zusammenfügen der beiden Kunststoffschalen 3 auf die entsprechenden Außenflächen der Kunststoffschaumkörper 5 aufgepresst wird. Aufgrund des heißen Zustandes der oberen Kunststoffschale 2 erfolgt auch im Bereich dieser Kontaktfläche zwischen Kunststoffschaumkörper 5 und oberer Kunststoffschale 2 ein Anschmelzen und demzufolge eine flächige und stoffschlüssige Verbindung im Bereich der benachbarten Kontaktflächen durch Verschweißung.

Wie anhand der verschiedenen Figuren des Palettenbodens 1 erkennbar ist, sind die Kunststoffschaumkörper 5 mit Aussparungen 8 versehen, die zur Materialeinsparung des jeweiligen Kunststoffschaumkörpers 5 dienen. Die Aussparungen 8 werden bei der Herstellung der formstabilen Kunststoffschaumkörper 5 mittels entsprechender Kerne oder Dorne im Schäumwerkzeug eingebracht.

Nach dem Zusammenfügen der beiden Kunststoffschalen 2, 3 unter vorheriger Einlage der Kunststoffschaumkörper 5 füllen die Kunststoffschaumkörper 5 diejeweiligen Hohlräume 7 zwischen den beiden Kunststoffschalen 2, 3 vollständig aus und sind mit den zugewandten Kontaktflächen der Innenseiten der beiden Kunststoffschalen 2, 3 im Wesentlichen flächig stoffschlüssig durch die Verschweißung verbunden. Die erfindungsgemäße Lösung nützt den heißen Zustand der Kunststoffschalen 2, 3 innerhalb der entsprechenden Werkzeugformen aus, um das Einfügen der Kunststoffschaumkörper 5 und die Verschweißung im Bereich seiner Oberflächen mit den Innenwandungen der Kunststoffschalen 2, 3 zu erreichen. Zusätzliche Erhitzungs- oder Verschweißungsvorgänge werden nicht benötigt.

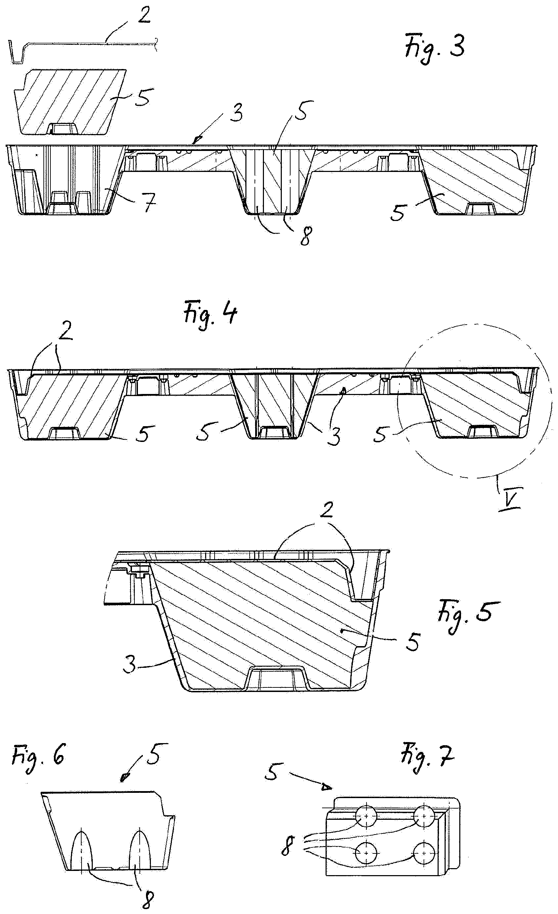

Bei der Ausführungsform nach den Fig. 1 und 3 bis 7 sind die Kunststoffmaterialien der beiden Kunststoffschalen 2, 3 und der Kunststoffschaumkörper 5 derart aufeinander abgestimmt, dass eine gegenseitige Verschweißbarkeit gewährleistet ist. Auch die Schmelzpunkte der Materialien der Kunststoffschaumkörper einerseits und der Kunststoffschalen 2, 3 andererseits sind so aufeinander abgestimmt, dass die Kunststoffschaumkörper 5 beim Zusammenfügen der beiden Kunststoffschalen 2, 3 nur im Bereich ihrer Oberflächen anschmelzen, ohne im Übrigen ihre formstabile Form zu verlieren. Im zusammengefügten und verschweißten Zustand gemäß den Fig. 4 und 5 sowie 1 füllen die Kunststoffschaumkörper 5 daher die Hohlräume 7 vollständig aus und bilden eine stabile Stützung der beiden Kunststoffschalen 2, 3. Die Stabilität des Palettenbodens 1 wird hierdurch stark erhöht. Zudem wird hierdurch eine verbesserte Schall- und Wärmeisolierung der Palettenböden 1 und damit der Palettenbehälter insgesamt erreicht. Weitere Teile eines entsprechenden Palettenbehälters, wie insbesondere ein Deckel und ein Faltwandungsring oder auch abnehmbare Füße eines Palettenbodens, können in gleicher Weise hergestellt werden wie der zuvor beschriebene Palettenboden 1.

Bei einem nicht dargestellten Ausführungsbeispiel der Erfindung sind die Kunststoffschaumkörper 5 und die Kunststoffschalen 2, 3 aus unterschiedlichen, nicht oder nur unter ungeeigneten Parametern miteinander verschweißbaren Kunststoffmaterialien hergestellt. Bei einer derartigen Ausführungsform erfolgt die stoffschlüssige Verbindung zwischen den Kunststoffschaumkörpern 5 und den Kunststoffschalen 2, 3 nicht durch eine Verschweißung, sondern vielmehr durch flächige Verklebung. Hierzu werden nach dem Tiefziehen der unteren Kunststoffschale 3 die Hohlkammern 7, in die die Kunststoffschaumkörper 5 eingesetzt werden, gekühlt. Die Kunststoffschaumkörper 5 und/oder die Innenflächen der Hohlkammer 7 werden mit wärmeaktiviertem Klebstoff beschichtet. Anschließend werden die Kunststoffschaumkörper 5 in die Hohlkammern 7 eingesetzt. In einem nächsten Verfahrensschritt wird die obere Kunststoffschale 2 mit ihrer entsprechenden Werkzeugform in gleicher Weise auf die untere Kunststoffschale 3 aufgepresst, wie dies zuvor anhand der Ausführungsform nach den Fig. 1 und 3 bis 7 beschrieben wurde. Einziger Unterschied ist es, dass auch die obere Kunststoffschale 2 in den Bereichen ihrer Innenseite, die mit den Oberflächen der Kunststoffschaumkörper 5 in Kontakt gelangen, punkt- oder flächenabschnittsförmig auf ca. 60°C bis 80°C gekühlt werden. Hierdurch wird vermieden, dass ein ungewünschtes Anschmelzen der Oberflächen der Kunststoffschaumkörper 5 im Bereich des Kontaktes zu der oberen Kunststoffschale 2 erfolgt. Die Kühlung, insbesondere durch Luft, erfolgt dabei so begrenzt, dass die Kontaktbereiche, die zur Verschweißung der oberen Kunststoffschale 2 mit der unteren Kunststoffschale 3 notwendig sind, von der Kühlung nicht erfasst werden. Auch an diesen Kontaktflächen wird auf Seiten des Kunststoffschaumkörpers 5 eine wärmeaktivierte Klebstoffschicht vorgesehen. Grundsätzlich kann eine Klebstoffschicht auch an der Innenseite der jeweiligen Kunststoffschale vorgesehen sein.

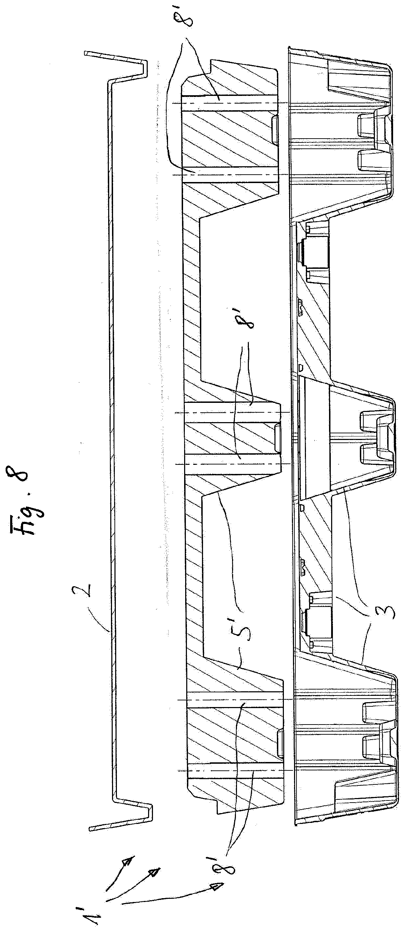

Der Palettenboden 1' nach Fig. 8 unterscheidet sich von dem Palettenboden 1 nach den Fig. 1 und 3 bis 7 lediglich dadurch, dass als Füllkörper nicht mehrere, sondern ein einzelner Kunststoffschaumkörper 5' vorgesehen ist, der sich über die gesamte Grundfläche des Palettenbodens 1' erstreckt. Auch der Kunststoffschaumkörper 5' weist gegenüber den zugewandten Hohlraum- und Hohlkammerbereichen, die die beiden Kunststoffschalen 2, 3 zwischen sich definieren, ein geringes Übermaß auf, um beim Zusammenfügen der Kunststoffschalen 2, 3 unter Druck gesetzt und im Bereich seiner Oberflächen verschweißt zu werden. Der einteilige Kunststoffschaumkörper 5' ist analog der Kunststoffschaumkörper 5 mit Aussparungen 8' versehen, die zur Materialreduzierung des Kunststoffschaumkörpers 5' dienen.

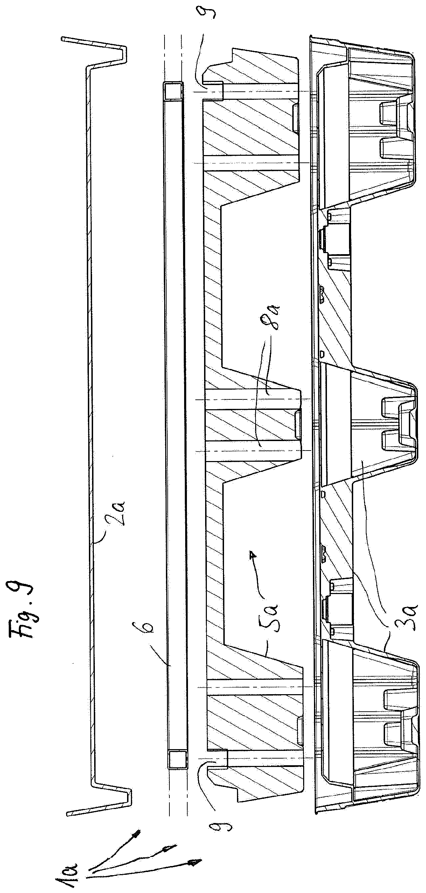

Auch die Herstellung des Palettenbodens 1 a nach den Fig. 2 und 9 erfolgt analog zu der Herstellungsweise der zuvor beschriebenen Ausführungsformen. Wesentlicher Unterschied zu dem Palettenboden 1' nach Fig. 8 ist es, dass in den einteiligen Kunststoffschaumkörper 5a, der im Wesentlichen entsprechend dem Kunststoffschaumkörper 5' nach Fig. 8 gestaltet ist, im Bereich seiner Oberseite noch ein Verstärkungsrahmen 6 aus Metall, vorliegend aus Stahl, eingelegt ist. Hierzu ist die Oberseite des Kunststoffschaumkörpers 5a mit einer rechteckigen und nach oben offenen Aufnahmenut 9 versehen, deren Abmessungen so auf den Verstärkungsrahmen 6 abgestimmt sind, dass der Verstärkungsrahmen 6 von oben her in die Aufnahmenut 9 eingesteckt werden kann und klemmend in der Aufnahmenut 9 aufgenommen ist. Dabei ist die Aufnahmenut 9 auf eine Höhe des Verstärkungsrahmens 6 abgestimmt, so dass eine Oberseite des Verstärkungsrahmens 6 mit der Oberseite des Kunststoffschaumkörpers 5a bündig abschließt und beim Aufsetzen der oberen Kunststoffschale 2a mit dieser in Kontakt gerät.

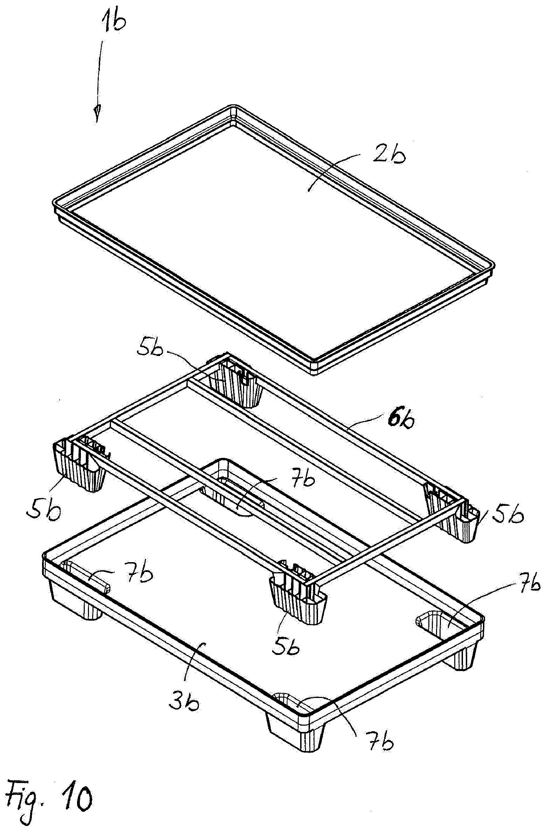

Eine Kunststoffpalette bzw. ein Palettenboden 1 b nach Fig. 10 entspricht im Wesentlichen den zuvor beschriebenen Ausführungsformen, und zwar sowohl bezüglich seiner Gestaltung als auch bezüglich seines Herstellungsverfahrens. Zur Vermeidung von Wiederholungen wird daher nachfolgend nur auf die Unterschiede zu den zuvor beschriebenen Ausführungsformen eingegangen.

Wesentlicher Unterschied des Palettenbodens 1 b nach Fig. 10 ist es, dass die Kunststoffkörper, die in entsprechende Hohlräume 7b im Bereich der Füße des Palettenbodens 1 b eingesetzt werden, als Kunststoffspritzgußkörper ausgestaltet sind. Die Hohlräume 7b, die die Ausbildung der Füße des Palettenbodens 1 b bewirken, sind in der unteren Kunststoffschale 3b ausgeformt. Die Kunststoffspritzgußkörper 5b sind mit ihren Außenkonturen auf die Innnenkonturen der Hohlräume 7b abgestimmt. Der Verstärkungsrahmen 6b wird bereits für die Herstellung der Kunststoffspritzgußkörper 5b in ein entsprechendes Werkzeug eingelegt, so dass der Verstärkungsrahmen 6b gemäß der Darstellung nach Figur 10 von den Kunststoffspritzgußkörpern 5b umspritzt wird. Dadurch bilden die Kunststoffspritzgußkörper 5b und der Verstärkungsrahmen 6b eine einteilig handhabbare Einheit. Durch die Spritzgußverbindung zwischen den Kunststoffspritzgußkörpern 5b und dem Verstärkungsrahmen 6b wird eine besonders gute Krafteinleitung bei Belastungen des Palettenbodens 1 b in die Kunststoffspritzgußkörper 5b erzielt. Da diese in eingesetztem und fertiggestelltem Zustand des Palettenbodens 1 b unmittelbar an den Wandungen der Hohlräume 7b bündig anliegen, wird eine entsprechende Krafteinleitung von Belastungen auf den Verstärkungsrahmen 6b zwangsläufig direkt in die Füße des Palettenbodens 1 b geleitet, wodurch sich eine besonders hohe Stabilität des Palettenbodens 1 b ergibt. Dadurch, dass die obere Kunststoffschale 2b umlaufend luftdicht und feuchtigkeitsdicht mit der unteren Kunststoffschale 3b verschweißt ist, wird der Verstärkungsrahmen 6b, der aus Stahl oder einem ähnlich stabilen Material besteht, auch nicht durch Feuchtigkeitseinflüsse aus der Umgebung belastet. Er ist vielmehr zwischen den beiden Kunststoffschalen 2b,3b vollständig gekapselt.

## Patentansprüche

1. Tiefgezogener Kunststoffhohlkörper in Form eines Palettenbodens für einen Palettenbehälter zur Lagerung und zum Transport von Teilen für den Fahrzeug- und Motorenbau, der durch zwei randseitig umlaufend miteinander verschweißte Kunststoffschalen (2, 3; 2a, 3a, 2b, 3b) gebildet ist, mit wenigstens einer Hohlkammer (7, 7b), in die wenigstens ein formstabiler Kunststoffschaum- oder -spritzgußkörper (5, 5', 5a, 5b) eingelegt ist, **dadurch gekennzeichnet, dass** der Kunststoffschaum- oder -spritzgußkörper (5, 5', 5a, 5b) mit seiner Außenkontur auf eine Innenkontur der Hohlkammer (7, 7b) abgestimmt und über seine Oberfläche flächig und stoffschlüssig mit benachbarten Innenflächen der Kunststoffschalen verbunden ist.

2. Tiefgezogener Kunststoffhohlkörper nach Anspruch 1, **dadurch gekennzeichnet, dass** der Kunststoffschaum- oder -spritzgußkörper (5, 5', 5a, 5b) mit mehreren Aussparungen (8, 8', 8a) zur Materialeinsparung versehen ist.

3. Verfahren zur Herstellung eines tiefgezogenen Kunststoffhohlkörpers nach Anspruch 1 oder 2, wobei eine erste Kunststoffplatte unter Bildung wenigstens einer offenen Hohlkammer zu einer ersten Kunststoffschale (3, 3a, 3b) tiefgezogen wird, **dadurch gekennzeichnet, dass** wenigstens ein formstabiler Kunststoffschaum- oder -spritzgußkörper (5, 5', 5a, 5b) mit einer auf eine Innenkontur der Hohlkammer (7, 7b) abgestimmten Außenkontur hergestellt und in die Hohlkammer (7, 7b) eingesetzt wird, dass eine zweite Kunststoffplatte bereitgestellt und durch Tiefziehen unter Bildung der zweiten Kunststoffschale (2, 2a, 2b) auf die erste Kunststoffschale (3, 3a, 3b) sowie den wenigstens einen Kunststoffschaum- oder -spritzgußkörper (5, 5', 5a, 5b) aufgesetzt und umlaufend randseitig mit einem Randbereich der ersten Kunststoffschale (3, 3a, 3b) verschweißt wird, und dass der Kunststoffschaum- oder -spritzgußkörper (5, 5', 5a, 5b) an seiner Oberfläche stoffschlüssig mit benachbarten Innenkonturen der beiden Kunststoffschalen verbunden wird.

4. Verfahren nach Anspruch 3, **dadurch gekennzeichnet, dass** der Kunststoffschaumkörper (5, 5', 5a) vor dem Einsetzen in die Hohlkammer (7) der ersten Kunststoffschale (3, 3a) mit einem Übermaß gegenüber der Hohlkammer sowie einer zweiten, durch die zweite Kunststoffschale (2, 2a) gebildeten Hohlkammer gefertigt wird.

5. Verfahren nach Anspruch 3 oder 4, **dadurch gekennzeichnet, dass** der Kunststoffschaumkörper (5, 5', 5a) mit den Innenkonturen der beiden Kunststoffschalen (2, 3; 2a, 3a) verschweißt wird.

6. Verfahren nach Anspruch 5, **dadurch gekennzeichnet, dass** die zweite Kunststoffplatte zu der zweiten Kunststoffschale (2, 2a) tiefgezogen und unter Druck auf die erste Kunststoffschale (3, 3a) und den wenigstens einen Kunststoffschaumkörper (5, 5', 5a) aufgesetzt und sowohl randseitig mit der ersten Kunststoffschale (3, 3a) als auch flächig mit der Oberfläche des Kunststoffschaumkörpers (5, 5', 5a) verschweißt wird.

7. Verfahren nach Anspruch 3, **dadurch gekennzeichnet, dass** der Kunststoffschaum- oder -spritzgußkörper in seinen Außenabmessungen auf Innenabmessungen der Hohlkammer (7, 7b) innerhalb der beiden Kunststoffschalen (2, 3; 2a, 3a, 2b, 3b) abgestimmt wird, und dass eine Oberfläche des Kunststoffschaum- oder -spritzgußkörpers mit einer Haftschicht, insbesondere einer Klebstoffschicht, versehen wird, die nach dem Zusammenfügen der Kunststoffschalen die stoffschlüssige Verbindung zu den Innenkonturen der Kunststoffschalen bildet.

8. Verfahren nach Anspruch 7, **dadurch gekennzeichnet, dass** wenigstens die Hohlkammer (7, 7b) der ersten Kunststoffschale (3, 3b) gekühlt wird, bevor der Kunststoffschaum- oder -spritzgußkörper eingesetzt wird.

9. Verfahren nach Anspruch 7, **dadurch gekennzeichnet, dass** der Kunststoffschaumkörper vor dem Einsetzen in die Hohlkammer der ersten Kunststoffschale zur Erzielung einer glatten Oberfläche im Bereich seiner Außenkontur angeschmolzen wird.

10. Verfahren nach einem der Ansprüche 3 bis 6, **dadurch gekennzeichnet, dass** vor dem Aufbringen der zweiten Kunststoffschale (2a, 2b) eine Verstärkungsprofilanordnung, insbesondere ein Verstärkungsrahmen (6, 6b), in die erste Kunststoffschale (3a, 3b) oder in den Kunststoffschaum- oder -spritzgußkörper (5a, 5b) eingefügt wird.

## Claims

1. Deep-drawn hollow plastic body in the form of a pallet bottom for a pallet container for storage and transportation of parts for vehicle and engine production, which is formed by two plastic shells (2, 3; 2a, 3a, 2b, 3b) welded to one another around the periphery, with at least one hollow chamber (7, 7b) into which at least one dimensionally stable body (5, 5', 5a, 5b) made of foamed or injection molded plastic is placed, **characterized in that** the outer contour of the body (5, 5', 5a, 5b) made of foamed or injection molded plastic is made to match an inner contour of the hollow chamber (7, 7b) and said body is connected by its surface in full area contact and with a material bond to neighboring inner surfaces of the plastic shells.

2. Deep-drawn hollow plastic body according to claim 1, **characterized in that** the body (5, 5', 5a, 5b) made of foamed or injection molded plastic is provided with multiple clearances (8, 8', 8a) to save material.

3. Method for producing a deep-drawn hollow plastic body according to claim 1 or 2, wherein a first sheet of plastic is deep-drawn, thereby obtaining at least one open hollow chamber to form a first plastic shell (3, 3a, 3b), **characterized in that** at least one dimensionally stable body (5, 5', 5a, 5b) made of foamed or injection molded plastic is produced with an outer contour made to match an inner contour of the hollow chamber (7, 7b) and is inserted into the hollow chamber (7, 7b), **in that** a second sheet of plastic is provided and by deep-drawing to form a second plastic shell (2, 2a, 2b) is placed onto the first plastic shell (3, 3a, 3b) and also onto the at least one plastic body (5, 5', 5a, 5b) made of foamed or injection molded plastic and welded around the periphery to a peripheral region of the first plastic shell (3, 3a, 3b), and **in that** the body (5, 5', 5a, 5b) made of foamed or injection molded plastic is connected at its surface in a material-bonding manner to neighboring inner contours of the two plastic shells.

4. Method according to claim 3, **characterized in that** the body (5, 5', 5a) made of foamed plastic, before being inserted into the hollow chamber (7) of the first plastic shell (3, 3a), is manufactured with an oversize with respect to the hollow chamber and also with respect to a second hollow chamber constituted by the second plastic shell (2, 2a).

5. Method according to claim 3 or 4, **characterized in that** the body (5, 5', 5a) made of foamed plastic is welded to the inner contours of the two plastic shells (2, 3; 2a, 3a).

6. Method according to claim 5, **characterized in that** the second sheet of plastic is deep-drawn into the second plastic shell (2, 2a) and placed, under pressure, onto the first plastic shell (3, 3a) and the at least one body (5, 5', 5a) made of foamed plastic and is welded both peripherally to the first plastic shell (3, 3a) and in full area contact to the surface of the body (5, 5', 5a) made of foamed plastic.

7. Method according to claim 3, **characterized in that** the outer dimensions of the body made of foamed or injection molded plastic are made to match inner dimensions of the hollow chamber (7, 7b) within the two plastic shells (2, 3; 2a, 3a, 2b, 3b), and **in that** a surface of the body made of foamed or injection molded plastic is provided with a bonding layer, in particular a layer of adhesive, which after the joining together of the plastic shells forms the material-bonding connection to the inner contours of the plastic shells.

8. Method according to claim 7, **characterized in that** at least the hollow chamber (7, 7b) of the first plastic shell (3, 3b) is cooled before the body made of foamed or injection molded plastic is inserted.

9. Method according to claim 7, **characterized in that** the body made of foamed plastic is incipiently melted in the region of its outer contour before insertion into the hollow chamber of the first plastic shell to achieve a smooth surface.

10. Method according to any of claims 3 to 6, **characterized in that**, before the application of the second plastic shell (2a, 2b), a reinforcing profile arrangement, in particular a reinforcing frame (6, 6b), is fitted into the first plastic shell (3a, 3b) or into the body (5a, 5b) made of foamed or injection molded plastic.

## Revendications

1. Corps creux en matière synthétique embouti sous forme d'un fond de palette pour un conteneur-palette pour le stockage et le transport de pièces destinées à la construction de véhicules et moteurs, composé par deux coquilles en matière synthétique (2, 3; 2a, 3a, 2b, 3b) soudées l'une à l'autre sur la périphérie au bord, avec au moins une chambre creuse (7, 7b), dans laquelle au moins un corps (5, 5', 5a, 5b) en mousse synthétique ou en matière synthétique moulée par injection dimensionnellement stable est inséré, **caractérisé en ce que** le corps (5, 5', 5a, 5b) en mousse synthétique ou en matière synthétique moulée par injection comprend un contour extérieur adapté à un contour intérieur de la chambre creuse (7, 7b) et est connecté avec surfaces intérieures des coquilles en matière synthétique adjacentes par le biais de sa surface en plein contact et une liaison par complémentarité de matières.

2. Corps creux en matière synthétique embouti selon la revendication 1, **caractérisé en ce que** le corps (5, 5', 5a, 5b) en mousse synthétique ou en matière synthétique moulée par injection est prévu de plusieurs évidements (8, 8', 8a) pour l'économie de matériel.

3. Procédé de production d'un corps creux en matière synthétique embouti selon la revendication 1 ou 2, dans lequel un premier panneau en matière synthétique est embouti, formant ainsi au moins une chambre creuse ouverte, pour obtenir une première coquille en matière synthétique (3, 3a, 3b), **caractérisé en ce qu'**au moins un corps (5, 5', 5a, 5b) en mousse synthétique ou en matière synthétique moulée par injection dimensionnellement stable est produit comprenant un contour extérieur adapté à un contour intérieur de la chambre creuse (7, 7b) et ledit corps est inséré dans la chambre creuse (7, 7b), **en ce qu'**un deuxième panneau en matière synthétique est fourni et, par voie d'emboutissage formant ainsi la deuxième coquille en matière synthétique (2, 2a, 2b), est posé sur la première coquille en matière synthétique (3, 3a, 3b) de même que sur l'au moins un corps (5, 5', 5a, 5b) en mousse synthétique ou en matière synthétique moulée par injection et soudé sur la périphérie au bord avec une zone périphérique de la première coquille en matière synthétique (3, 3a, 3b), et **en ce que** le corps (5, 5', 5a, 5b) en mousse synthétique ou en matière synthétique moulée par injection est connecté avec contours intérieurs des deux coquilles en matière synthétique adjacentes à sa surface en liaison par complémentarité de matières.

4. Procédé selon la revendication 3, **caractérisé en ce que** le corps (5, 5', 5a) en mousse synthétique, avant d'être inséré dans la chambre creuse (7) de la première coquille en matière synthétique (3, 3a), est fabriqué avec surdimensionnement par rapport à la chambre creuse ainsi que par rapport à une deuxième chambre creuse formée par la deuxième coquille en matière synthétique (2, 2a).

5. Procédé selon la revendication 3 ou 4, **caractérisé en ce que** le corps (5, 5', 5a) en mousse synthétique est soudé avec les contours intérieurs des deux coquilles en matière synthétique (2, 3; 2a, 3a).

6. Procédé selon la revendication 5, **caractérisé en ce que** le deuxième panneau en matière synthétique est embouti pour obtenir la deuxième coquille en matière synthétique (2, 2a) et est posé sur la première coquille en matière synthétique (3, 3a) et l'au moins un corps (5, 5', 5a) en mousse synthétique sous pression et soudé avec la première coquille en matière synthétique (3, 3a) au bord et aussi bien avec la surface du corps (5, 5', 5a) en mousse synthétique en plein contact.

7. Procédé selon la revendication 3, **caractérisé en ce que** le corps en mousse synthétique ou en matière synthétique moulée par injection est soumis à une adaptation de ses dimensions extérieurs aux dimensions intérieurs de la chambre creuse (7, 7b) au sein des deux coquilles en matière synthétique (2, 3; 2a, 3a, 2b, 3b), et **en ce qu'**une surface du corps en mousse synthétique ou en matière synthétique moulée par injection est prévue d'une couche adhésive, en particulier une couche de colle, laquelle forme la liaison par complémentarité de matières avec les contours intérieurs des coquilles en matière synthétique après l'assemblage des coquilles en matière synthétique.

8. Procédé selon la revendication 7, **caractérisé en ce qu'**au moins la chambre creuse (7, 7b) de la première coquille en matière synthétique (3, 3b) est refroidie avant que le corps en mousse synthétique ou en matière synthétique moulée par injection est inséré.

9. Procédé selon la revendication 7, **caractérisé en ce que** le corps en mousse synthétique avant d'être inséré dans la chambre creuse de la première coquille en matière synthétique est fondu initialement pour atteindre une surface lisse dans la zone de son contour extérieur.

10. Procédé selon l'une quelconque des revendications 3 à 6, **caractérisé en ce qu'**un agencement de profilé de renforcement, en particulier un cadre de renforcement (6, 6b), est inséré dans la première coquille en matière synthétique (3a, 3b) ou dans le corps (5a, 5b) en mousse synthétique ou en matière synthétique moulée par injection avant que la deuxième coquille en matière synthétique (2a, 2b) est appliquée.
